# EUROPEAN PATENT SPECIFICATION

(11) **EP 2 778 909 B1**
(45) Date of publication and mention of the grant of the patent: **06.01.2021**
(21) Application number: 12848311.2
(22) Date of filing: 20.09.2012
(51) Int. Cl.: G06F 9/44, G06F 8/30, G06F 9/54

(54) **APPLICATION IMPLEMENTATION METHOD AND DEVICE**
ANWENDUNGSIMPLEMENTIERUNGSVERFAHREN UND -VORRICHTUNG
PROCÉDÉ ET DISPOSITIF DE MISE EN OEUVRE D'UNE APPLICATION

(30) Priority: 07.11.2011 CN 201110348337
(43) Date of publication of application: 17.09.2014
(73) Proprietor: Tencent Technology (Shenzhen) Company Limited, Shenzhen, Guangdong 518044 (CN)
(72) Inventor: ZHANG, Ru, Guangdong Province PRC 518044 (CN); WANG, Qing, Guangdong Province PRC 518044 (CN); WU, Yu, Guangdong Province PRC 518044 (CN); ZENG, Xing, Guangdong Province PRC 518044 (CN); DAI, Yunfeng, Guangdong Province PRC 518044 (CN)
(74) Representative: Klunker IP Patentanwälte PartG mbB
(86) International application number: PCT/CN2012/081650
(87) International publication number: WO 2013/067856

(56) References cited:
- CN-A- 1 357 820
- CN-A- 101 431 523
- CN-A- 101 582 908
- CN-A- 101 673 199
- US-A1- 2009 007 067
- US-B1- 6 782 527
- US-B1- 7 750 913

## Description

### PRIOR ART

US 6,782,527 B1 teaches a method of providing a set of desired application functions to a plurality of network-coupled computer appliances.

### FIELD OF INVENTION

The present invention relates to the communication field, and more particularly, to an application implementation method and device.

### BACKGROUND

With the increasing improvement of software and hardware techniques, various software applications have been emerging one after another. Each type of software implements an application, with a variety of behaviors defined in the software. A client can implement the application corresponding to the software by executing the behaviors contained in the software.

At present, when developing software, a technical person encodes the various behaviors contained by the software in order in the software; after installing the software, the client can execute the various behaviors contained by the software in the order that these various behaviors are contained in the software, and after the client finishes executing these various behaviors contained by the software, the application corresponding to the software is thus implemented.

In the process of implementing the present invention, the inventors found out at least the following problems with the prior art.

Currently, the various behaviors contained by software are hardcoded into the software. If the application corresponding to the software is to be modified, the behaviors contained by the software can only be modified when the new version of the software is released, wherein its flexibility is insufficient and its development costs are higher.

### SUMMARY OF THE INVENTION

To improve the flexibility of modifying an application and reduce the development costs of modifying an application, the present invention provides an application implementation method and device, as claimed in claims 1 and 6, respectively. The technical solutions are as follows.

An application implementation method, comprises:
receiving a behavior configuration table of an application to be implemented sent by a service end, with the behavior configuration table including identifications of Application Programming Interfaces (APIs) and configuration information corresponding to behaviors contained in the application to be implemented;
implementing the application to be implemented according to the identifications of the APIs and the configuration information corresponding to the behaviors contained in the application to be implemented.

The receiving a behavior configuration table of an application to be implemented sent by a service end comprises:
sending a command package request to the service end, with the command package request carrying an identification of the application to be implemented;
receiving the behavior configuration table of the application to be implemented sent by the service end, with the behavior configuration table of the application to be implemented sent by the service end being obtained by the service end from behavior configuration tables of applications stored in the service end itself according to the identification of the application to be implemented.

The receiving a behavior configuration table of an application to be implemented sent by a service end comprises:
sending a command package request to the service end;
receiving the behavior configuration table of the application to be implemented sent by the service end, with the behavior configuration table of the application to be implemented sent by the service end being selected by the service end from behavior configuration tables of applications stored in the service end itself according to a selection strategy.

The implementing the application to be implemented according to the identifications of the APIs and the configuration information corresponding to the behaviors contained in the application to be implemented comprises:
calling the APIs corresponding to the behaviors contained in the application to be implemented, according to the identifications of the APIs corresponding to the behaviors contained in the application to be implemented;
implementing the application to be implemented by executing the APIs corresponding to the behaviors contained in the application to be implemented, according to the configuration information of the behaviors contained in the application to be implemented.

Before implementing the application to be implemented according to the identifications of the APIs and the configuration information corresponding to the behaviors contained in the application to be implemented, the method further comprises:
decrypting behavior configuration information of the application to be implemented, if the behavior configuration table of the application to be implemented is encrypted by the service end.

An application implementation device, comprises:
a receiving module, for receiving a behavior configuration table of an application to be implemented sent by a service end, with the behavior configuration table including identifications of APIs and configuration information corresponding to behaviors contained in the application to be implemented;
an implementing module, for implementing the application to be implemented according to the identifications of the APIs and the configuration information corresponding to the behaviors contained in the application to be implemented.

The receiving module comprises:
a first sending unit, for sending a command package request to the service end, with the command package request carrying an identification of the application to be implemented;
a first receiving unit, for receiving the behavior configuration table of the application to be implemented sent by the service end, with the behavior configuration table of the application to be implemented sent by the service end being obtained by the service end from behavior configuration tables of applications stored in the service end itself according to the identification of the application to be implemented.

The receiving module comprises:
a second sending unit, for sending a command package request to the service end;
a second receiving unit, for receiving the behavior configuration table of the application to be implemented sent by the service end, with the behavior configuration table of the application to be implemented sent by the service end being selected by the service end from behavior configuration tables of applications stored in the service end itself according to a selection strategy.

The implementing module comprises:
a calling unit, for calling the APIs corresponding to the behaviors contained in the application to be implemented, according to the identifications of the APIs corresponding to the behaviors contained in the application to be implemented;
an executing unit, for implementing the application to be implemented by executing the APIs corresponding to the behaviors contained in the application to be implemented, according to the configuration information of the behaviors contained in the application to be implemented.

The device further comprises:
a decrypting module, for decrypting behavior configuration information of the application to be implemented, if the behavior configuration table of the application to be implemented is encrypted by the service end.

In the present invention, the behavior configuration table of the application to be implemented sent by the service end is received, with the behavior configuration table including the identifications of the APIs and the configuration information corresponding to the behaviors contained in the application to be implemented; and the application to be implemented is implemented according to the identifications of the APIs and the configuration information corresponding to the behaviors contained in the application to be implemented. Thus, when modifying the application to be implemented, the technical person only needs to modify at the service end the identifications of the APIs and the configuration information corresponding to the behaviors contained in the application to be implemented, which enables to improve the flexibility of modifying the application and reduce the development costs of modifying the application.

The above description is only a brief summary of the technical solutions of the present invention. In order to make the technical means of the present invention clearer and thus implementable according to the content disclosed in the specification, as well as to enable the abovementioned and other aims, features and advantages of the present invention to be readily understood, a detailed description will be rendered with embodiments in the following by referring to the appended drawings.

### BRIEF DESCRIPTION OF THE DRAWINGS

Figure 1 illustrates the first flow diagram of the application implementation method provided by Embodiment 1 of the present invention;
Figure 2 illustrates the second flow diagram of the application implementation method provided by Embodiment 1 of the present invention;
Figure 3 illustrates the third flow diagram of the application implementation method provided by Embodiment 1 of the present invention;
Figure 4 illustrates the fourth flow diagram of the application implementation method provided by Embodiment 1 of the present invention;
Figure 5 illustrates a flow diagram of an application implementation method provided by Embodiment 2 of the present invention;
Figure 6 illustrates a flow diagram of an application implementation device provided by Embodiment 3 of the present invention.

### DETAILED DESCRIPTION

To further explain the technical means adopted by the present invention to achieve its intended aims and the effects thereof, a detailed description of the specific implementations, structures, features and their effects of the information feedback method and the corresponding server set forth according to the present invention will be rendered in the following, by referring to the appended drawings and the preferable embodiments.

The aforementioned and other technical contents, features and effects of the present invention will be clearly presented in the following detailed description of the preferable embodiments by referring to the appended drawings. By an explanation of the specific implementations, a deeper and more concrete understanding of the technical means adopted by the present invention to achieve its intended aims and the effects thereof can be attained. However, the appended drawings are only provided for the use of reference and illustration, but not for imposing any restriction on the present invention.

### Embodiment 1

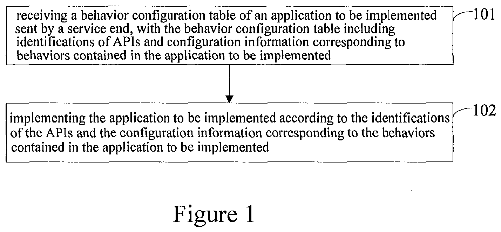

As shown in Figure 1, this embodiment of the present invention provides an application implementation method, which comprises:
Step 101: receiving a behavior configuration table of an application to be implemented sent by a service end, with the behavior configuration table including identifications of APIs and configuration information corresponding to behaviors contained in the application to be implemented;
Step 102: implementing the application to be implemented according to the identifications of the APIs and the configuration information corresponding to the behaviors contained in the application to be implemented.

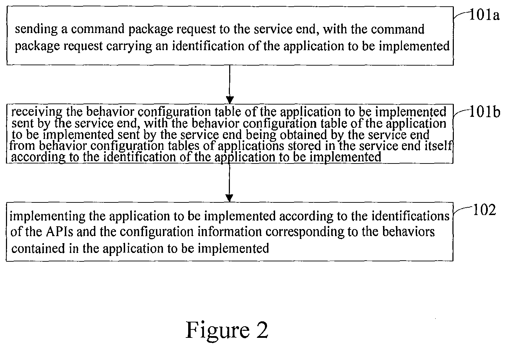

Wherein, by referring to Figure 2, the abovementioned Step 101 can include:
Step 101a: sending a command package request to the service end, with the command package request carrying an identification of the application to be implemented;
Step 101b: receiving the behavior configuration table of the application to be implemented sent by the service end, with the behavior configuration table of the application to be implemented sent by the service end being obtained by the service end from behavior configuration tables of applications stored in the service end itself according to the identification of the application to be implemented.

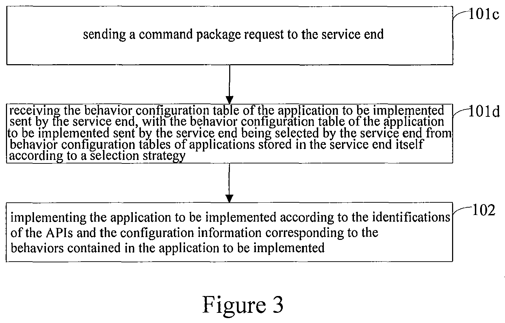

Wherein, by referring to Figure 3, the abovementioned Step 101 can include:
Step 101c: sending a command package request to the service end;
Step 101d: receiving the behavior configuration table of the application to be implemented sent by the service end, with the behavior configuration table of the application to be implemented sent by the service end being selected by the service end from behavior configuration tables of applications stored in the service end itself according to a selection strategy.

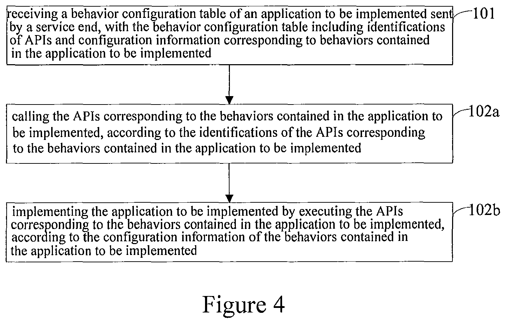

Wherein, by referring to Figure 4, the abovementioned Step 102 can include:
Step 102a: calling the APIs corresponding to the behaviors contained in the application to be implemented, according to the identifications of the APIs corresponding to the behaviors contained in the application to be implemented;
Step 102b: implementing the application to be implemented by executing the APIs corresponding to the behaviors contained in the application to be implemented, according to the configuration information of the behaviors contained in the application to be implemented.

Further, before executing Step 102, the method can also comprise:
decrypting behavior configuration information of the application to be implemented, if the behavior configuration table of the application to be implemented is encrypted by the service end.

In this embodiment of the present invention, the behavior configuration table of the application to be implemented sent by the service end is received, with the behavior configuration table including the identifications of the APIs and the configuration information corresponding to the behaviors contained in the application to be implemented; and the application to be implemented is implemented according to the identifications of the APIs and the configuration information corresponding to the behaviors contained in the application to be implemented. Thus, when modifying the application to be implemented, the technical person only needs to modify at the service end the identifications of the APIs and the configuration information corresponding to the behaviors contained in the application to be implemented, which enables to improve the flexibility of modifying the application and reduce the development costs of modifying the application.

### Embodiment 2

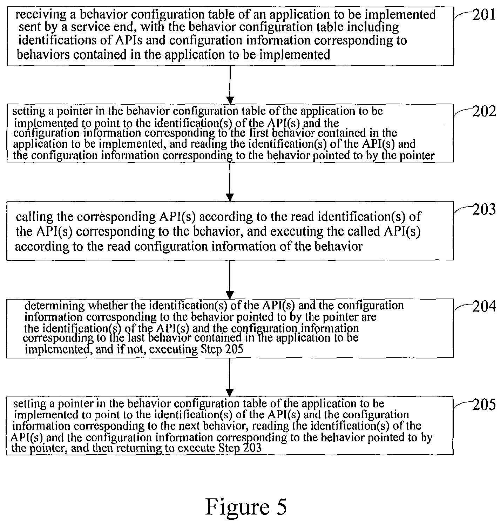

As shown in Figure 5, this embodiment of the present invention provides an application implementation method, which comprises:
Step 201: receiving a behavior configuration table of an application to be implemented sent by a service end, with the behavior configuration table including identifications of APIs and configuration information corresponding to behaviors contained in the application to be implemented, with the configuration information of each behavior containing at least the configuration parameter(s) of each behavior.

Wherein, each behavior corresponds to one or more APIs; the specific process of a client implementing a certain behavior can be: the client calls the API(s) corresponding to the behavior, and executes the called API(s) according to the configuration information of the behavior, such as the configuration parameter(s) and so on. For example, the behavior to be implemented by the client is finding the file *a.sis,* the API to be called by the behavior is *Find ( )* which is used to implement the finding function, and the configuration parameter of this behavior is the file name *a.sis*; the client calls *Find ( )* to be called by the behavior , and finds the file *a.sis* via the called *Find ( )* according to the configuration parameter *a.sis* of the behavior.

Wherein, the configuration information of the behavior can also include such information of the behavior as trigger condition, display regulation, implemented behavior description information and/or resulting behavior, etc.

Wherein, in this embodiment, the client can be a mobile phone, a personal computer, etc.; the service end can be a cloud, etc., with the cloud being a software platform comprising one or more servers.

Wherein, the technical person can configure at the service end the identifications of the APIs and the configuration information corresponding to various behaviors contained in the application to be implemented, and store the identifications of the APIs and the configuration information corresponding to various behaviors contained in the application to be implemented in the behavior configuration table in the order that the various behaviors contained in the application to be implemented are executed.

Wherein, the service end can select the behavior configuration table of the application to be implemented from behavior configuration tables of applications stored in the service end itself according to a selection strategy, and initiatively send the behavior configuration table of the application to be implemented to the client; or, the client sends a command package request to the service end, and the service end selects the behavior configuration table of the application to be implemented from the behavior configuration tables of the applications stored in the service end itself according to the selection strategy, and sends the behavior configuration table of the application to be implemented to the client; or, the client sends a command package request to the service end, with the command package request carrying an identification of the application to be implemented, and the service end obtains the behavior configuration table of the application to be implemented from the behavior configuration tables of the applications stored in the service end itself according to the identification of the application to be implemented carried by the command package request, and sends the behavior configuration table of the application to be implemented to the client. Wherein, the selection strategy can be that the behavior configuration table of the application that is most recently configured by the technical person is preferentially selected; for example, at the service end, the technical person firstly configures the behavior configuration table of application 1 and then configures the behavior configuration table of application 2; accordingly, the behavior configuration table of application 2 which has been most recently configured will be selected by the service end according to the selection strategy, and the behavior configuration table of application 2 that has been selected will be set as the behavior configuration table of the application to be implemented.

Further, before sending the command package request to the service end, the client can encrypt the command package request, and then send the encrypted command package request to the service end; accordingly, after receiving the command package request, the service end will firstly decrypt the received command package request, and then execute the step of obtaining the behavior configuration table of the application to be implemented.

Further, before sending the behavior configuration table of the application to be implemented to the client, the service end can encrypt the behavior configuration table of the application to be implemented, and then send the encrypted behavior configuration table of the application to be implemented to the client.

For example, the application to be implemented is to detect and kill the Trojan C in the client, and the process the client implements the application to be implemented is: finding the hidden file *_a.sis,* deleting the hidden file *_a.sis,* detecting and killing the processes A1 and A2, and then uninstalling the files *a.sis* and *b.sis,* thus achieving detecting and killing the Trojan C; wherein, the application to be implemented comprises behavior 1 for finding the hidden file *_a.sis,* behavior 2 for deleting the hidden file *_a.sis,* behavior 3 for detecting and killing the processes A1 and A2, and behavior 4 for uninstalling the files *a.sis* and *b.sis*; the API corresponding to behavior 1 is *Find ( )* which is used for finding files, the identification of *Find ( )* is ID1, the configuration information of behavior 1 includes at least the configuration parameter of behavior 1, and the configuration parameter of behavior 1 is the file name _*a.sis*; the API corresponding to behavior 2 is *Delete ( )* which is used for deleting files, the identification of *Delete ( )* is ID2, the configuration information of behavior 2 includes at least the configuration parameter of behavior 2, and the configuration parameter of behavior 2 is the file name *_a.sis;* the API corresponding to behavior 3 is *Kill ( )* which is used for detecting and killing processes, the identification of *Kill ( )* is ID3, the configuration information of behavior 3 includes at least the configuration parameters of behavior 3, and the configuration parameters of behavior 3 are the process names A1 and A2; the API corresponding to behavior 4 is *Uninstall ( )* which is used for uninstalling files, the identification of *Uninstall ( )* is ID4, the configuration information of behavior 4 includes at least the configuration parameters of behavior 4, and the configuration parameters of behavior4 are the file names *a.sis* and *b.sis.*

Wherein, at the service end, the technical person configures the identification of the API and the configuration information corresponding to behavior 1 contained in the application to be implemented, the identification of the API and the configuration information corresponding to behavior 2 contained in the application to be implemented, the identification of the API and the configuration information corresponding to behavior 3 contained in the application to be implemented, and the identification of the API and the configuration information corresponding to behavior 4 contained in the application to be implemented, respectively; and stores the identification of the API and the configuration information corresponding to behavior 1 contained in the application to be implemented, the identification of the API and the configuration information corresponding to behavior 2 contained in the application to be implemented, the identification of the API and the configuration information corresponding to behavior 3 contained in the application to be implemented, and the identification of the API and the configuration information corresponding to behavior 4 contained in the application to be implemented in the behavior configuration table as shown in Table 1.

**Table 1**

| Behavior | Identification of API | Configuration Information |
|---|---|---|
| Behavior 1 | ID1 | _a.sis |
| Behavior 2 | ID2 | _a.sis |
| Behavior 3 | ID3 | A1 andA2 |
| Behavior 4 | ID4 | a.sisi and b.sis |

Wherein, after the behavior configuration table of the application to be implemented as shown in Table 1 is configured by the technical person at the service end, the service end can send the behavior configuration table of the application to be implemented as shown in Table 1 to the client.

Step 202: setting a pointer in the behavior configuration table of the application to be implemented to point to the identification(s) of the API(s) and the configuration information corresponding to the first behavior contained in the application to be implemented, and reading the identification(s) of the API(s) and the configuration information corresponding to the behavior pointed to by the pointer.

Further, if the behavior configuration table of the application to be implemented is encrypted by the service end, the client will firstly decrypt the behavior configuration table of the application to be implemented and then execute this step.

For example, the client receives the behavior configuration table of the application to be implemented as shown in Table 1 sent by the service end, sets the pointer in the behavior configuration information of the application to be implemented as shown in Table 1 to point to the identification of the API and the configuration information corresponding to behavior 1, and reads the identification ID1 of the API and the configuration information *a.sis* corresponding to behavior 1 pointed to by the pointer;
Step 203: calling the corresponding API(s) according to the read identification(s) of the API(s) corresponding to the behavior, and executing the called API(s) according to the read configuration information of the behavior.

Wherein, various APIs are defined in the operating system of the client, with each API having a corresponding identification, and therefore the client can call the corresponding API(s) from the operating system of the client according to the read identification(s) of the API(s) corresponding to the behavior.

For example, according to reading the identification ID1 of the API corresponding to behavior 1, the client calls the corresponding API *Find ( )* from the operating system of the client, and finds the corresponding hidden file *_a.sis* by executing the called *Find ( )* according to the configuration information *_a.sis* of behavior 1, hence completes the execution of behavior 1.

Step 204: determining whether the identification(s) of the API(s) and the configuration information corresponding to the behavior pointed to by the pointer are the identification(s) of the API(s) and the configuration information corresponding to the last behavior contained in the application to be implemented, and if not, executing Step 205.

Wherein, if the client determines that the identification(s) of the API(s) and the configuration information corresponding to the behavior pointed to by the pointer are the identification(s) of the API(s) and the configuration information corresponding to the last behavior contained in the application to be implemented, then it completes the implementing of the application to be implemented, and ends the operation.

Step 205: setting a pointer in the behavior configuration table of the application to be implemented to point to the identification(s) of the API(s) and the configuration information corresponding to the next behavior, reading the identification(s) of the API(s) and the configuration information corresponding to the behavior pointed to by the pointer, and then returning to execute Step 203.

Wherein, after reading the identification(s) of the API(s) and the configuration information corresponding to the last behavior contained in the application to be implemented, calling the API(s) corresponding to the last behavior, and executing the called API(s) according to the configuration information of the last behavior, the client completes the execution of the last behavior contained in the application to be implemented, that is, completes the implementing of the application to be implemented.

For example, the client determines that the identification of the API and the configuration information corresponding to behavior 1 pointed to by the pointer is not the identification of the API and the configuration information corresponding to the last behavior contained in the application to be implemented, and then sets the pointer in the behavior configuration table of the application to be implemented as shown in Table 1 to point to the identification of the API and the configuration information corresponding to behavior 2; reads the identification ID2 of the API and the configuration information *_a.sis* corresponding to behavior 2 pointed to by the pointer, calls the corresponding API, *Delete ( )*, from the operating system of the client according to the identification ID2 of the API corresponding to behavior 2, and deletes the hidden file _*a.sis* by executing the called *Delete ( )* according to the configuration information *_a.sis* of behavior 2.

The client determines that the identification of the API and the configuration information corresponding to behavior 2 pointed to by the pointer is not the identification of the API and the configuration information corresponding to the last behavior contained in the application to be implemented, and then sets the pointer in the behavior configuration table of the application to be implemented as shown in Table 1 to point to the identification of the API and the configuration information corresponding to behavior 3; reads the identification ID3 of the API and the configuration parameters A1 and A2 corresponding to behavior 3 pointed to by the pointer, calls the corresponding API, *Kill ( )*, from the operating system of the client according to the identification ID3 of the API corresponding to behavior 3, and detects and kills the processes A1 and A2 by executing the called *Kill ( )* according to the configuration parameters A1 and A2 of behavior 3.

The client determines that the identification of the API and the configuration information corresponding to behavior 3 pointed to by the pointer is not the identification of the API and the configuration information corresponding to the last behavior contained in the application to be implemented, and then sets the pointer in the behavior configuration table of the application to be implemented as shown in Table 1 to point to the identification of the API and the configuration information corresponding to behavior 4; reads the identification ID4 of the API and the configuration parameters *a*.*sis* and *b.sis* corresponding to behavior 4 pointed to by the pointer, calls the corresponding API, *Uninstall ( )*, from the operating system of the client according to the identification ID4 of the API corresponding to behavior 4, and deletes the files *a.sis* and *b.sis* by executing the called *Uninstall ( )* according to the configuration parameters *a.sis* and *b.sis* of behavior 4.

The client determines that the identification of the API and the configuration information corresponding to behavior 4 pointed to by the pointer is the identification of the API and the configuration information corresponding to the last behavior contained in the application to be implemented, and thus, completes the implementing of the behavior to be implemented, namely that the Trojan C is detected and killed, and ends the operation.

In this embodiment of the present invention, the behavior configuration table of the application to be implemented sent by the service end is received, with the behavior configuration table including the identifications of the APIs and the configuration information corresponding to the behaviors contained in the application to be implemented; and the application to be implemented is implemented according to the identifications of the APIs and the configuration information corresponding to the behaviors contained in the application to be implemented. Thus, when modifying the application to be implemented, the technical person only needs to modify at the service end the identifications of the APIs and the configuration information corresponding to the behaviors contained in the application to be implemented, which enables to improve the flexibility of modifying the application and reduce the development costs of modifying the application.

### Embodiment 3

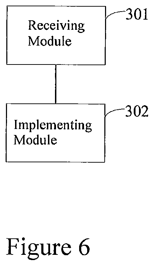

As shown in Figure 6, this embodiment of the present invention provides an application implementation device, which comprises:
a receiving module 301, for receiving a behavior configuration table of an application to be implemented sent by a service end, with the behavior configuration table including identifications of APIs and configuration information corresponding to behaviors contained in the application to be implemented;
an implementing module 302, for implementing the application to be implemented according to the identifications of the APIs and the configuration information corresponding to the behaviors contained in the application to be implemented.

Wherein, the receiving module 301 comprises:
a first sending unit, for sending a command package request to the service end, with the command package request carrying an identification of the application to be implemented;
a first receiving unit, for receiving the behavior configuration table of the application to be implemented sent by the service end, with the behavior configuration table of the application to be implemented sent by the service end being obtained by the service end from behavior configuration tables of applications stored in the service end itself according to the identification of the application to be implemented.

Wherein, the receiving module 301 comprises:
a second sending unit, for sending a command package request to the service end;
a second receiving unit, for receiving the behavior configuration table of the application to be implemented sent by the service end with the behavior configuration table of the application to be implemented sent by the service end being selected by the service end from behavior configuration tables of applications stored in the service end itself according to a selection strategy.

Wherein, the implementing module 302 comprises:
a calling unit, for calling the APIs corresponding to the behaviors contained in the application to be implemented, according to the identifications of the APIs corresponding to the behaviors contained in the application to be implemented;
an executing unit, for implementing the application to be implemented by executing the APIs corresponding to the behaviors contained in the application to be implemented, according to the configuration information of the behaviors contained in the application to be implemented.

Further, the device also comprises:
a decrypting module, for decrypting behavior configuration information of the application to be implemented, if the behavior configuration table of the application to be implemented is encrypted by the service end.In this embodiment of the present invention, the behavior configuration table of the application to be implemented sent by the service end is received, with the behavior configuration table including the identifications of the APIs and the configuration information corresponding to the behaviors contained in the application to be implemented; and the application to be implemented is implemented according to the identifications of the APIs and the configuration information corresponding to the behaviors contained in the application to be implemented. Thus, when modifying the application to be implemented, the technical person only needs to modify at the service end the identifications of the APIs and the configuration information corresponding to the behaviors contained in the application to be implemented, which enables to improve the flexibility of modifying the application and reduce the development costs of modifying the application.

It should be noted that: in the application being implemented by an application implementation device provided by the abovementioned embodiment, the abovementioned division of functional modules is only presented as an example for the purpose of explanation. In an actual application, the abovementioned functions can be distributed to different functional modules according to the actual needs and be completed, that is, the internal structure of the device is divided into different functional modules, so as to achieve all or a part of the functions described above. In addition, the application implementation device provided by the abovementioned embodiment belongs to the same idea with the embodiments of the application implementation method, with the specific implementation process being described in detail in the method embodiments, so that won't be covered again here.

Those of ordinary skills in the art can understand that all or a part of the steps implementing the abovementioned embodiments can be achieved by hardware, or by a program which instructs the relevant hardware, wherein the program can be stored in a computer-readable storage medium, wherein the aforesaid storage medium can be a read-only memory, a disk or an optical disk, etc.

The abovementioned contents are only presented as the embodiments of the present invention, and do not constitute any restriction in any form on the present invention. Although the present invention has been disclosed in terms of the embodiments as mentioned above, these embodiments are not intended to put any restriction on the present invention. Utilizing the technical contents disclosed above, any person skilled in the art can make some amendments or modifications to become equivalent embodiments, without going beyond the scope of the technical solutions of the present invention. Any simple amendment, equivalent change and modification made to the above embodiments according to the technical essence of the present invention, without going beyond the content of the technical solutions of the present invention, still falls within the scope of the technical solutions of the present invention.

### INDUSTRIAL APPLICABILITY

In the present invention, a behavior configuration table of an application to be implemented sent by a service end is received, with the behavior configuration table including the identifications of the APIs and the configuration information corresponding to the behaviors contained in the application to be implemented; and the application to be implemented is implemented according to the identifications of the APIs and the configuration information corresponding to the behaviors contained in the application to be implemented. Thus, when modifying an application to be implemented, the technical person only needs to modify at the service end the identifications of the APIs and the configuration information corresponding to the behaviors contained in the application to be implemented, which enables to improve the flexibility of modifying the application and reduce the development costs of modifying the application.

## Claims

1. An application implementation method, comprises:
receiving (101) a behavior configuration table of an application to be implemented sent by a service end, with the behavior configuration table including identifications of Application Programming Interfaces (APIs) and configuration information corresponding to behaviors contained in the application to be implemented, wherein the identifications of the APIs and the configuration information are stored in the behavior configuration table in the order that the various behaviors contained in the application to be implemented are executed, the configuration information corresponding to the behaviors includes at least one of trigger condition, display regulation, implemented behavior description information and resulting behavior;
implementing (102) the application to be implemented according to the identifications of the APIs and the configuration information corresponding to the behaviors contained in the application to be implemented, by means of an implementing module (302), wherein the implementing module (302) comprises:
a calling unit, for calling the APIs corresponding to the behaviors contained in the application to be implemented, according to the identifications of the APIs corresponding to the behaviors contained in the application to be implemented;
an executing unit, for implementing the application to be implemented by executing the APIs corresponding to the behaviors contained in the application to be implemented, according to the configuration information of the behaviors contained in the application to be implemented; and
modifying, at the service end, the application to be implemented by modifying the identifications of the API and the configuration information corresponding to the behaviors contained in the application to be implemented,
wherein implementing (102) the application to be implemented according to the identifications of the APIs and the configuration information corresponding to the behaviors contained in the application to be implemented comprises:
setting a pointer in the behavior configuration table of the application to be implemented to point to the identification of the API and the configuration information corresponding to a first behavior contained in the application to be implemented, reading the identification of the API and the configuration information corresponding to the behavior pointed to by the pointer, calling the corresponding API according to the read identification of the API corresponding to the behavior, and executing the called API according to the read configuration information of the behavior;
determining whether the identification of the API and the configuration information corresponding to the behavior pointed by the pointer are the identification of the API and the configuration information corresponding to the last behavior contained in the application to be implemented,
if yes, stopping the executing;
if no, setting a pointer in the behavior configuration table of the application to be implemented to point to the identification of the API and the configuration information corresponding to the next behavior, reading the identification of the API and the configuration information corresponding to the behavior pointed to by the pointer, calling the corresponding API according to the read identification of the API corresponding to the behavior, and executing the called API according to the read configuration information of the behavior, until the last behavior contained in the application to be implemented is executed.

2. The method of claim 1, wherein the receiving a behavior configuration table of an application to be implemented sent by a service end comprises:
sending (101a) a command package request to the service end, with the command package request carrying an identification of the application to be implemented;
receiving (101b) the behavior configuration table of the application to be implemented sent by the service end, with the behavior configuration table of the application to be implemented sent by the service end being obtained by the service end from behavior configuration tables of applications stored in the service end itself according to the identification of the application to be implemented.

3. The method of claim 1, wherein the receiving a behavior configuration table of an application to be implemented sent by a service end comprises:
sending (101c) a command package request to the service end;
receiving (101d) the behavior configuration table of the application to be implemented sent by the service end, with the behavior configuration table of the application to be implemented sent by the service end being selected by the service end from behavior configuration tables of applications stored in the service end itself according to a selection strategy.

4. The method of claim 1, wherein the implementing the application to be implemented according to the identifications of the APIs and the configuration information corresponding to the behaviors contained in the application to be implemented comprises:
calling (102a) the APIs corresponding to the behaviors contained in the application to be implemented, according to the identifications of the APIs corresponding to the behaviors contained in the application to be implemented;
implementing (102b) the application to be implemented by executing the APIs corresponding to the behaviors contained in the application to be implemented, according to the configuration information of the behaviors contained in the application to be implemented.

5. The method of claim 1, wherein before implementing the application to be implemented according to the identifications of the APIs and the configuration information corresponding to the behaviors contained in the application to be implemented, the method further comprises:
decrypting behavior configuration information of the application to be implemented, if the behavior configuration table of the application to be implemented is encrypted by the service end.

6. An application implementation device, comprises:
a receiving module (301), for receiving a behavior configuration table of an application to be implemented sent by a service end, with the behavior configuration table including identifications of Application Programming Interfaces (APIs) and configuration information corresponding to behaviors contained in the application to be implemented, wherein the identifications of the APIs and the configuration information are stored in the behavior configuration table in the order that the various behaviors contained in the application to be implemented are executed, the configuration information corresponding to the behaviors includes at least one of trigger condition, display regulation, implemented behavior description information and resulting behavior;
an implementing module (302), for implementing the application to be implemented according to the identifications of the APIs and the configuration information corresponding to the behaviors contained in the application to be implemented, wherein the implementing module (302) comprises:
a calling unit, for calling the APIs corresponding to the behaviors contained in the application to be implemented, according to the identifications of the APIs corresponding to the behaviors contained in the application to be implemented;
an executing unit, for implementing the application to be implemented by executing the APIs corresponding to the behaviors contained in the application to be implemented, according to the configuration information of the behaviors contained in the application to be implemented, wherein the executing unit is configured to implement an application which is modified by modifying identifications of API and configuration information corresponding to behaviors contained in the application,
wherein the implementing module (302) is configured to:
set a pointer in the behavior configuration table of the application to be implemented to point to the identification of the API and the configuration information corresponding to a first behavior contained in the application to be implemented, read the identification of the API and the configuration information corresponding to the behavior pointed to by the pointer, call the corresponding API according to the read identification of the API corresponding to the behavior, and execute the called API according to the read configuration information of the behavior;
determine whether the identification of the API and the configuration information corresponding to the behavior pointed by the pointer are the identification of the API and the configuration information corresponding to the last behavior contained in the application to be implemented,
if yes, stop the executing;
if no, set a pointer in the behavior configuration table of the application to be implemented to point to the identification of the API and the configuration information corresponding to the next behavior, read the identification of the API and the configuration information corresponding to the behavior pointed to by the pointer, call the corresponding API according to the read identification of the API corresponding to the behavior, and execute the called API according to the read configuration information of the behavior, until the last behavior contained in the application to be implemented is executed.

7. The device of claim 6, wherein the receiving module comprises:
a first sending unit, for sending a command package request to the service end, with the command package request carrying an identification of the application to be implemented;
a first receiving unit, for receiving the behavior configuration table of the application to be implemented sent by the service end, with the behavior configuration table of the application to be implemented sent by the service end being obtained by the service end from behavior configuration tables of applications stored in the service end itself according to the identification of the application to be implemented.

8. The device of claim 6, wherein the receiving module comprises:
a second sending unit, for sending a command package request to the service end;
a second receiving unit, for receiving the behavior configuration table of the application to be implemented sent by the service end, with the behavior configuration table of the application to be implemented sent by the service end being selected by the service end from behavior configuration tables of applications stored in the service end itself according to a selection strategy.

9. The device of claim 6, wherein the device further comprises:
a decrypting module, for decrypting behavior configuration information of the application to be implemented, if the behavior configuration table of the application to be implemented is encrypted by the service end.

## Patentansprüche

1. Anwendungsimplementierungsverfahren, umfassend:
Empfangen (101) einer Verhaltenskonfigurationstabelle einer zu implementierenden Anwendung, die von einem Dienstende gesendet wird, wobei die Verhaltenskonfigurationstabelle Identifikationen von Anwendungsprogrammierschnittstellen (APIs) und Konfigurationsinformationen enthält, die den in der zu implementierenden Anwendung enthaltenen Verhalten entsprechen, wobei die Identifikationen der APIs und die Konfigurationsinformationen in der Verhaltenskonfigurationstabelle in der Reihenfolge gespeichert werden, in der die verschiedenen in der zu implementierenden Anwendung enthaltenen Verhalten ausgeführt werden, wobei die den Verhalten entsprechenden Konfigurationsinformationen mindestens eine von Triggerbedingung, Anzeigeregulierung, implementierten Verhaltensbeschreibungsinformationen und resultierendem Verhalten einschließen;
Implementieren (102) der zu implementierenden Anwendung gemäß den Identifikationen der APIs und den Konfigurationsinformationen, die den in der zu implementierenden Anwendung enthaltenen Verhalten entsprechen, mittels eines Implementierungsmoduls (302), wobei das Implementierungsmodul (302) umfasst:
eine Aufrufeinheit zum Aufrufen der APIs, die den in der zu implementierenden Anwendung enthaltenen Verhalten entsprechen, gemäß den Identifikationen der APIs, die den in der zu implementierenden Anwendung enthaltenen Verhalten entsprechen;
eine Ausführungseinheit zum Implementieren der zu implementierenden Anwendung durch Ausführung der APIs, die den in der zu implementierenden Anwendung enthaltenen Verhalten entsprechen, gemäß den Konfigurationsinformationen der in der zu implementierenden Anwendung enthaltenen Verhalten; und
Ändern der zu implementierenden Anwendung am Dienstende durch Änderung der Identifikationen der API und der Konfigurationsinformationen, die den in der zu implementierenden Anwendung enthaltenen Verhalten entsprechen,
wobei das Implementieren (102) der zu implementierenden Anwendung gemäß den Identifikationen der APIs und den Konfigurationsinformationen, die den in der zu implementierenden Anwendung enthaltenen Verhalten entsprechen, umfassend:
Setzen eines Zeigers in der Verhaltenskonfigurationstabelle der zu implementierenden Anwendung, der auf die Identifikation der API und die Konfigurationsinformation zeigt, die einem ersten Verhalten entspricht, das in der zu implementierenden Anwendung enthalten ist, Lesen der Identifikation der API und der Konfigurationsinformation, die dem Verhalten entspricht, auf das der Zeiger zeigt, Aufrufen der entsprechenden API gemäß der gelesenen Identifikation der API, die dem Verhalten entspricht, und Ausführen der aufgerufenen API gemäß der gelesenen Konfigurationsinformation des Verhaltens;
Bestimmen, ob die Identifikation der API und die Konfigurationsinformation, die dem durch den Zeiger gezeigten Verhalten entspricht, die Identifikation der API und die Konfigurationsinformation sind, die dem letzten in der zu implementierenden Anwendung enthaltenen Verhalten entspricht,
wenn ja, Stoppen der Ausführung;
wenn nein, Setzen eines Zeigers in der Verhaltenskonfigurationstabelle der zu implementierenden Anwendung, der auf die Identifikation der API und die dem nächsten Verhalten entsprechende Konfigurationsinformation zeigt, Lesen der Identifikation der API und der Konfigurationsinformation, die dem Verhalten entspricht, auf das der Zeiger zeigt, Aufrufen der entsprechenden API gemäß der gelesenen Identifikation der API, die dem Verhalten entspricht, und Ausführen der aufgerufenen API gemäß der gelesenen Konfigurationsinformation des Verhaltens, bis das letzte in der zu implementierenden Anwendung enthaltene Verhalten ausgeführt wird.

2. Verfahren nach Anspruch 1, wobei das Empfangen einer Verhaltenskonfigurationstabelle einer zu implementierenden Anwendung, die von einem Dienstende gesendet wird, umfasst:
Senden (101a) einer Befehlspaketanforderung an das Dienstende, wobei die Befehlspaketanforderung eine Identifikation der zu implementierenden Anwendung enthält;
Empfangen (101b) der von dem Dienstende gesendeten Verhaltenskonfigurationstabelle der zu implementierenden Anwendung, wobei die von dem Dienstende gesendete Verhaltenskonfigurationstabelle der zu implementierenden Anwendung von dem Dienstende aus Verhaltenskonfigurationstabellen de Anwendungen bezogen wird, die in dem Dienstende selbst gemäß der Identifikation der zu implementierenden Anwendung gespeichert sind.

3. Verfahren nach Anspruch 1, wobei das Empfangen einer Verhaltenskonfigurationstabelle einer zu implementierenden Anwendung, die von einem Dienstende gesendet wird, umfasst:
Senden (101c) einer Befehlspaketanforderung an das Dienstende;
Empfangen (101d) der vom Dienstende gesendeten Verhaltenskonfigurationstabelle der zu implementierenden Anwendung, wobei die vom Dienstende gesendete Verhaltenskonfigurationstabelle der zu implementierenden Anwendung vom Dienstende aus Verhaltenskonfigurationstabellen der Anwendungen, die im Dienstende selbst gespeichert sind, gemäß einer Auswahlstrategie ausgewählt wird.

4. Verfahren nach Anspruch 1, wobei das Implementieren der zu implementierenden Anwendung gemäß den Identifikationen der APIs und den Konfigurationsinformationen, die den in der zu implementierenden Anwendung enthaltenen Verhalten entsprechen, umfasst:
Aufrufen (102a) der APIs, die den in der zu implementierenden Anwendung enthaltenen Verhalten entsprechen, gemäß den Identifikationen der APIs, die den in der zu implementierenden Anwendung enthaltenen Verhalten entsprechen;
Implementieren (102b) der zu implementierenden Anwendung durch Ausführung der APIs, die den in der zu implementierenden Anwendung enthaltenen Verhalten entsprechen, gemäß den Konfigurationsinformationen der in der zu implementierenden Anwendung enthaltenen Verhalten.

5. Verfahren nach Anspruch 1, wobei das Verfahren vor dem Implementieren der zu implementierenden Anwendung gemäß den Identifikationen der APIs und den Konfigurationsinformationen, die den in der zu implementierenden Anwendung enthaltenen Verhalten entsprechen, weiterhin umfasst:
Entschlüsseln der Verhaltenskonfigurationsinformationen der zu implementierenden Anwendung, wenn die Verhaltenskonfigurationstabelle der zu implementierenden Anwendung von dem Dienstende verschlüsselt wird.

6. Eine Anwendungsimplementierungsvorrichtung umfasst:
ein Empfangsmodul (301) zum Empfangen einer Verhaltenskonfigurationstabelle einer zu implementierenden Anwendung, die von einem Dienstende gesendet wird, wobei die Verhaltenskonfigurationstabelle Identifikationen von Anwendungsprogrammierschnittstellen (APIs) und Konfigurationsinformationen enthält, die den in der zu implementierenden Anwendung enthaltenen Verhalten entsprechen, wobei die Identifikationen der APIs und die Konfigurationsinformationen in der Verhaltenskonfigurationstabelle in der Reihenfolge gespeichert sind, in der die verschiedenen in der zu implementierenden Anwendung enthaltenen Verhalten ausgeführt werden, wobei die den Verhalten entsprechenden Konfigurationsinformationen mindestens eine von Triggerbedingung, Anzeigeregulierung, implementierten Verhaltensbeschreibungsinformationen und resultierendem Verhalten enthalten;
ein Implementierungsmodul (302), zum Implementieren der zu implementierenden Anwendung gemäß den Identifikationen der APIs und den Konfigurationsinformationen, die den in der zu implementierenden Anwendung enthaltenen Verhalten entsprechen, wobei das Implementierungsmodul (302) umfasst:
eine Aufrufeinheit zum Aufrufen der APIs, die den in der zu implementierenden Anwendung enthaltenen Verhalten entsprechen, gemäß den Identifikationen der APIs, die den in der zu implementierenden Anwendung enthaltenen Verhalten entsprechen;
eine Ausführungseinheit zum Implementieren der zu implementierenden Anwendung durch Ausführen der APIs, die den in der zu implementierenden Anwendung enthaltenen Verhalten entsprechen, gemäß den Konfigurationsinformationen der in der zu implementierenden Anwendung enthaltenen Verhalten, wobei die Ausführungseinheit konfiguriert ist, um eine Anwendung zu implementieren, die durch Modifizieren von Identifikationen der API und Konfigurationsinformationen, die den in der Anwendung enthaltenen Verhalten entsprechen, modifiziert wird,
wobei das Implementierungsmodul (302) so konfiguriert ist:
setzen einen Zeiger in der Verhaltenskonfigurationstabelle der zu implementierenden Anwendung, der auf die Identifikation der API und die Konfigurationsinformation zeigt, die einem ersten Verhalten entspricht, das in der zu implementierenden Anwendung enthalten ist, lesen die Identifikation der API und die Konfigurationsinformation, die dem Verhalten entspricht, auf das der Zeiger zeigt, rufen die entsprechende API gemäß der gelesenen Identifikation der API auf, die dem Verhalten entspricht, und führen die aufgerufene API gemäß der gelesenen Konfigurationsinformation des Verhaltens aus;
bestimmen, ob die Identifikation der API und die Konfigurationsinformation, die dem durch den Zeiger gezeigten Verhalten entspricht, die Identifikation der API und die Konfigurationsinformation sind, die dem letzten in der zu implementierenden Anwendung enthaltenen Verhalten entspricht,
wenn ja, stoppen der Ausführung;
wenn nein, setzen einen Zeiger in der Verhaltenskonfigurationstabelle der zu implementierenden Anwendung, der auf die Identifikation der API und die dem nächsten Verhalten entsprechende Konfigurationsinformation zeigt, lesen die Identifikation der API und die dem vom Zeiger angezeigten Verhalten entsprechende Konfigurationsinformation, rufen die entsprechende API gemäß der gelesenen Identifikation der dem Verhalten entsprechenden API auf und führen die aufgerufene API gemäß der gelesenen Konfigurationsinformation des Verhaltens aus, bis das letzte in der zu implementierenden Anwendung enthaltene Verhalten ausgeführt wird.

7. Die Vorrichtung von Anspruch 6, wobei das Empfangsmodul umfasst:
eine erste Sendeeinheit zum Senden einer Befehlspaketanforderung an das Dienstende, wobei die Befehlspaketanforderung eine Identifikation der zu implementierenden Anwendung trägt;
eine erste Empfangseinheit zum Empfangen der von dem Dienstende gesendeten Verhaltenskonfigurationstabelle der zu implementierenden Anwendung, wobei die von dem Dienstende gesendete Verhaltenskonfigurationstabelle der zu implementierenden Anwendung von dem Dienstende aus Verhaltenskonfigurationstabellen der Anwendungen bezogen wird, die in dem Dienstende selbst gemäß der Identifikation der zu implementierenden Anwendung gespeichert sind.

8. Die Vorrichtung von Anspruch 6, wobei das Empfangsmodul umfasst:
eine zweite Sendeeinheit, um eine Befehlspaketanforderung an das Dienstende zu senden;
eine zweite Empfangseinheit zum Empfangen der vom Dienstende gesendeten Verhaltenskonfigurationstabelle der zu implementierenden Anwendung, wobei die vom Dienstende gesendete Verhaltenskonfigurationstabelle der zu implementierenden Anwendung vom Dienstende aus Verhaltenskonfigurationstabellen der Anwendungen, die im Dienstende selbst gespeichert sind, gemäß einer Auswahlstrategie ausgewählt wird.

9. Die Vorrichtung nach Anspruch 6, wobei die Vorrichtung ferner umfasst:
ein Entschlüsselungsmodul zum Entschlüsseln der Verhaltenskonfigurationsinformation der zu implementierenden Anwendung, wenn die Verhaltenskonfigurationstabelle der zu implementierenden Anwendung von dem Dienstende verschlüsselt wird.

## Revendications

1. Procédé de mise en œuvre d'application, comprenant les étapes consistant à :
recevoir (101) une table de configuration de comportement d'une application à mettre en œuvre envoyée par un moyen de services en bout, la table de configuration de comportement incluant des identifications d'interfaces de programmation d'application (APIs, Application Programming Interfaces) et des informations de configuration correspondant à des comportements contenus dans l'application à mettre en œuvre, dans lequel les identifications des API et les informations de configuration sont stockées dans la table de configuration de comportement dans l'ordre suivant lequel les divers comportements contenus dans l'application à mettre en œuvre sont exécutés ; les informations de configuration correspondant aux comportements incluent au moins un élément parmi une condition de déclenchement, une régulation d'affichage, des informations de description de comportement mis en œuvre, et un comportement résultant ;
mettre en œuvre (102) l'application à mettre en œuvre conformément aux identifications des API et aux informations de configuration correspondant aux comportements contenus dans l'application à mettre en œuvre, au moyen d'un module de mise en œuvre (302), dans lequel le module de mise en œuvre (302) comprend :
une unité d'appel, pour appeler les API correspondant aux comportements contenus dans l'application à mettre en œuvre, conformément aux identifications des API correspondant aux comportements contenus dans l'application à mettre en œuvre ;
une unité d'exécution, pour mettre en œuvre l'application à mettre en œuvre en exécutant les API correspondant aux comportements contenus dans l'application à mettre en œuvre, conformément aux informations de configuration des comportements contenus dans l'application à mettre en œuvre, et
modifier, au niveau du moyen de services en bout, l'application à mettre en œuvre en modifiant les identifications des API et les informations de configuration correspondant aux comportements contenus dans l'application à mettre en œuvre ;
dans lequel l'étape pour mettre en œuvre (102) l'application à mettre en œuvre conformément aux identifications des API et aux informations de configuration correspondant aux comportements contenus dans l'application à mettre en œuvre comprend les étapes suivantes :
régler un pointeur dans la table de configuration de comportement de l'application à mettre en œuvre pour qu'il pointe vers l'identification de l'API et les informations de configuration correspondant à un premier comportement contenu dans l'application à mettre en œuvre, lire l'identification de l'API et les informations de configuration correspondant au comportement vers lequel est pointé le pointeur ;
appeler l'API correspondante conformément à l'identification lue de l'API correspondant au comportement, et exécuter l'API appelée conformément aux informations de configuration lues du comportement ;
déterminer si oui ou non l'identification de l'API et les informations de configuration correspondant au comportement pointé par le pointeur sont l'identification de l'API et les informations de configuration correspondant au dernier comportement contenu dans l'application à mettre en œuvre ;
si oui, arrêter l'exécution ;
si non, régler un pointeur dans la table de configuration de comportement de l'application à mettre en œuvre pour qu'il pointe vers l'identification de l'API et les informations de configuration correspondant au comportement suivant, lire l'identification de l'API et les informations de configuration correspondant au comportement vers lequel est pointé le pointeur, appeler l'API correspondante conformément à l'identification lue de l'API correspondant au comportement, et exécuter l'API appelée conformément aux informations de configuration lues du comportement, jusqu'à ce que le dernier comportement contenu dans l'application à mettre en œuvre soit exécuté.

2. Procédé selon la revendication 1, dans lequel l'étape pour recevoir une table de configuration de comportement d'une application à mettre en œuvre envoyée par un moyen de services en bout comprend les étapes consistant à :
envoyer (101a) une requête de progiciel de commande au moyen de services en bout, la requête de progiciel de commande portant une identification de l'application à mettre en œuvre, et
recevoir (101b) la table de configuration de comportement de l'application à mettre en oeuvre envoyée par le moyen de services en bout, la table de configuration de comportement de l'application à mettre en œuvre envoyée par le moyen de services en bout étant obtenue par le moyen de services en bout à partir de tables de configuration de comportement d'applications stockées dans le moyen de services en bout même conformément à l'identification de l'application à mettre en œuvre.

3. Procédé selon la revendication 1, dans lequel l'étape pour recevoir une table de configuration de comportement d'une application à mettre en œuvre envoyée par un moyen de services en bout comprend les étapes consistant à :
envoyer (101c) une requête de progiciel de commande au moyen de services en bout, et
recevoir (101d) la table de configuration de comportement de l'application à mettre en œuvre envoyée par le moyen de services en bout, la table de configuration de comportement de l'application à mettre en œuvre envoyée par le moyen de services en bout étant sélectionnée par le moyen de services en bout à partir de tables de configuration de comportement d'applications stockées dans le moyen de services en bout même conformément à une stratégie de sélection.

4. Procédé selon la revendication 1, dans lequel l'étape pour mettre en œuvre l'application à mettre en œuvre conformément aux identifications des API et aux informations de configuration correspondant aux comportements contenus dans l'application à mettre en œuvre comprend les étapes consistant à :
appeler (102a) les APIs correspondant aux comportements contenus dans l'application à mettre en œuvre, conformément aux identifications des API correspondant aux comportements contenus dans l'application à mettre en œuvre, et
mettre en œuvre (102b) l'application à mettre en œuvre en exécutant les API correspondant aux comportements contenus dans l'application à mettre en œuvre, conformément aux informations de configuration des comportements contenus dans l'application à mettre en œuvre.

5. Procédé selon la revendication 1, dans lequel avant l'étape pour mettre en œuvre l'application à mettre en œuvre conformément aux identifications des API et aux informations de configuration correspondant aux comportements contenus dans l'application à mettre en œuvre, le procédé comprend en outre l'étape consistant à :
déchiffrer des informations de configuration de comportement de l'application à mettre en œuvre, si la table de configuration de comportement de l'application à mettre en œuvre est chiffrée par le moyen de services en bout.

6. Dispositif de mise en œuvre d'application, comprenant :
un module de réception (301), pour recevoir une table de configuration de comportement d'une application à mettre en œuvre envoyée par un moyen de services en bout, la table de configuration de comportement incluant des identifications d'interfaces de programmation d'application (API) et des informations de configuration correspondant aux comportements contenus dans l'application à mettre en œuvre, dans lequel les identifications des API et les informations de configuration sont stockées dans la table de configuration de comportement dans l'ordre suivant lequel les divers comportements contenus dans l'application à mettre en œuvre sont exécutés ; les informations de configuration correspondant aux comportements incluent au moins un élément parmi une condition de déclenchement, une régulation d'affichage, des informations de description de comportement mis en œuvre, et un comportement résultant ;
un module de mise en œuvre (302), pour mettre en œuvre l'application à mettre en œuvre conformément aux identifications des API et les informations de configuration correspondant aux comportements contenus dans l'application à mettre en œuvre, dans lequel le module de mise en œuvre (302) comprend :
une unité d'appel, pour appeler les API correspondant aux comportements contenus dans l'application à mettre en œuvre, conformément aux identifications des API correspondant aux comportements contenus dans l'application à mettre en œuvre ;
une unité d'exécution, pour mettre en œuvre l'application à mettre en œuvre en exécutant les API correspondant aux comportements contenus dans l'application à mettre en œuvre, conformément aux informations de configuration des comportements contenus dans l'application à mettre en œuvre, dans lequel l'unité d'exécution est configurée pour mettre en œuvre une application, laquelle est modifiée en modifiant des identifications d'API et les informations de configuration correspondant aux comportements contenus dans l'application ;
dans lequel le module de mise en œuvre (302) est configuré pour :
régler un pointeur dans la table de configuration de comportement de l'application à mettre en œuvre pour qu'il pointe vers l'identification de l'API et les informations de configuration correspondant à un premier comportement contenu dans l'application à mettre en œuvre, lire l'identification de l'API et les informations de configuration correspondant au comportement vers lequel est pointé le pointeur, appeler l'API correspondante conformément à l'identification lue de l'API correspondant au comportement, et exécuter l'API appelée conformément aux informations de configuration lues du comportement ;
déterminer si oui ou non l'identification de l'API et les informations de configuration correspondant au comportement pointé par le pointeur sont l'identification de l'API et les informations de configuration correspondant au dernier comportement dans l'application à mettre en œuvre ;
si oui, arrêter l'exécution ;
si non, régler un pointeur dans la table de configuration de comportement de l'application à mettre en œuvre pour qu'il pointe vers l'identification de l'API et les informations de configuration correspondant au comportement suivant, lire l'identification de l'API et les informations de configuration correspondant au comportement vers lequel est pointé le pointeur, appeler l'API correspondante conformément à l'identification lue de l'API correspondant au comportement, et exécuter l'API appelée conformément aux informations de configuration lues du comportement, jusqu'à ce que le dernier comportement contenu dans l'application à mettre en œuvre soit exécuté.

7. Dispositif selon la revendication 6, dans lequel le module de réception comprend :
une première unité pour envoyer, pour envoyer une requête de progiciel de commande au moyen de services en bout, la requête de progiciel de commande portant une identification de l'application à mettre en œuvre, et
une première unité pour recevoir, pour recevoir la table de configuration de comportement de l'application à mettre en œuvre envoyée par le moyen de services en bout, la table de configuration de comportement de l'application à mettre en œuvre envoyée par le moyen de services en bout étant obtenue par le moyen de services en bout à partir de tables de configuration de comportement d'applications stockées dans le moyen de services en bout même conformément à l'identification de l'application à mettre en œuvre.

8. Dispositif selon la revendication 6, dans lequel le module de réception comprend :
une seconde unité pour envoyer, pour envoyer une requête de progiciel de commande au moyen de services en bout, et
une seconde unité pour recevoir, pour recevoir la table de configuration de comportement de l'application à mettre en œuvre envoyée par le moyen de services en bout, la table de configuration de comportement de l'application à mettre en œuvre envoyée par le moyen de services en bout étant sélectionnée par le moyen de services en bout à partir de tables de configuration de comportement d'applications stockées dans le moyen de services en bout même conformément à une stratégie de sélection.

9. Dispositif selon la revendication 6, dans lequel le dispositif comprend en outre :
un module de déchiffrement, pour déchiffrer des informations de configuration de comportement de l'application à mettre en œuvre, si la table de configuration de comportement de l'application à mettre en œuvre est chiffrée par le moyen de services en bout.
